# DEMANDE DE BREVET EUROPEEN

(11) **EP 0 834 383 A1**
(43) Date de publication de la demande: **08.04.1998**
(21) Numéro de dépôt: 97402228.7
(22) Date de dépôt: 25.09.1997
(51) Int. Cl.: B25J 17/02

(54) **Robot à structure parallèle**

(30) Priorité: 07.10.1996 FR 9612185
(71) Demandeur: GEC ALSTHOM SYSTEMES ET SERVICES SA, 75116 Paris (FR)
(72) Inventeur: Freinex, Gérard, 42230 Saint Sebastien (FR)
(74) Mandataire: Gosse, Michel

(57) **Abrégé**

Robot à structure parallèle comportant une table inférieure (1) et une table supérieure (2) solidaire d'un organe effecteur, reliées par six vérins motorisés (3 à 8), les vérins étant positionnés de façon à réaliser une triangulation et chacun d'eux étant articulés d'une part à la table inférieure et d'autre part à la table supérieure selon au moins cinq axes d'articulation : trois à une extrémité (10) et au moins deux à l'autre extrémité (9), chaque vérin étant équipé d'un codeur mesurant son élongation, caractérisé en ce que la table inférieure (1) est en outre reliée à la table supérieure (2), au voisinage de leur centre de gravité respectif, par une tige télescopique (12) articulée à ses extrémités à la table inférieure et à la table supérieure selon cinq axes d'articulation : deux à l'une de ses extrémités (18) et trois à l'autre extrémité (13, 16), cette tige télescopique étant équipée de six codeurs : un (21) pour l'élongation de la tige, deux (19, 20) pour l'articulation à deux axes de type cardan et trois (14, 15, 17) pour l'articulation à trois axes de type rotule, ledit robot ayant une chaîne de commande utilisant le modèle mathématique inverse (24) du robot pour déterminer les consignes (25) d'élongation des vérins à partir d'une consigne de position (23) du plateau supérieur et utilisant le modèle mathématique direct (28) de ladite tige télescopique articulée (12), jouant le rôle de robot passif non motorisé, pour calculer la position effective (29) du plateau supérieur à partir des données (27) des six codeurs équipant ladite tige, et effectuer à partir de cette position effective, la correction (30) de position nécessaire.

## Description

La présente invention concerne un robot à structure parallèle.

On sait qu'il existe deux grandes familles de robots : les robots à structure série et les robots à structure parallèle.

Un robot à structure série est un robot qui relie l'organe terminal mobile, tel qu'un outil par exemple, à la partie fixe : châssis, par un ensemble d'éléments de structure disposés les uns à la suite des autres en série. Chaque élément de structure est relié au suivant par une liaison permettant un mouvement simple, tel qu'une translation ou une rotation. Un moyen moteur, appelé actionneur anime chaque liaison. Une liaison assurant un mouvement unique : translation, ou rotation simple autour d'un axe unique, avec son actionneur constituent ce que l'on appelle un axe actif. Six axes actifs sont au minimum nécessaire pour obtenir six degrés de liberté de l'organe terminal : trois translations selon des axes perpendiculaires ox, oy et oz et trois rotations θₓ, θ_{y} et θ_{z} autour de ces trois axes.

Un robot à structure parallèle est un robot qui relie l'organe terminal [par exemple une table supérieure] à la partie fixe (une table inférieure par exemple) par six actionneurs. Chaque actionneur, constitué par un vérin, est relié à ces deux tables par une liaison à rotule à l'une de ses extrémités et par une liaison type cardan à l'autre extrémité. Les six vérins sont positionnés de façon à réaliser une triangulation et chaque vérin constitue un axe actif.

Par rapport au robot à structure série, le robot à structure parallèle est plus rigide, plus précis, plus rapide, il a une capacité de charge plus importante tout en étant plus léger et ayant une plus faible inertie. Dans certaines applications, le robot à structure parallèle s'impose donc à cause de ces qualités intrinsèques, cependant, sa commande est beaucoup plus difficile que celle du robot série.

En effet, pour la commande d'un robot en boucle fermée, il est nécessaire de mettre en oeuvre le modèle mathématique inverse qui permet, connaissant la position que doit avoir l'organe terminal, d'en déduire la positon qu'il faut donner aux axes actifs, mais pour effectuer la correction de position, de façon à obtenir une commande en boucle fermée, il est nécessaire également de mettre en oeuvre le modèle mathématique direct qui permet, connaissant la position de chaque axe, d'en déduire la position de l'organe terminal. Or, le modèle mathématique direct d'un robot parallèle est très compliqué et n'est résolu que par des méthodes itératives. C'est la raison pour laquelle le robot parallèle est actuellement très peu utilisé car, en revanche, le robot série est beaucoup plus facile à piloter, son modèle mathématique direct étant facile à formuler et le modèle inverse, bien que moins aisé, est cependant bien maîtrisé par la technologie actuelle.

La présente invention propose un robot à structure parallèle amélioré permettant une commande aisée.

L'invention a ainsi pour objet un robot à structure parallèle comportant une table inférieure et une table supérieure solidaire d'un organe effecteur, reliées par six vérins motorisés, les vérins étant positionnés de façon à réaliser une triangulation et chacun d'eux étant articulés d'une part à la table inférieure et d'autre part à la table supérieure selon au moins cinq axes d'articulation : trois à une extrémité et au moins deux à l'autre extrémité, chaque vérin étant équipé d'un codeur mesurant son élongation, caractérisé en ce que la table inférieure est en outre reliée à la table supérieure, au voisinage de leur centre de gravité respectif, par une tige télescopique articulée à ses extrémités à la table inférieure et à la table supérieure selon cinq axes d'articulation : deux à l'une de ses extrémités et trois à l'autre extrémité, cette tige télescopique étant équipée de six codeurs : un pour l'élongation de la tige, deux pour l'articulation à deux axes de type cardan et trois pour l'articulation à trois axes de type rotule, ledit robot ayant une chaîne de commande utilisant le modèle mathématique inverse du robot pour déterminer les consignes d'élongation des vérins à partir d'une consigne de position du plateau supérieur et utilisant le modèle mathématique direct de ladite tige télescopique articulée jouant le rôle de robot série passif non motorisé pour calculer la position effective du plateau supérieur à partir des données des six codeurs équipant ladite tige et effectuer, à partir de cette position effective, la correction de position nécessaire.

On va maintenant donner la description d'un exemple de mise en oeuvre de l'invention en se reportant au dessin annexé dans lequel :

La figure 1 montre en élévation un robot du type à structure parallèle selon l'invention.

La figure 2 est une vue de droite (selon la flèche II) de la figure 1, mais avec la table supérieure en position haute, bien qu'avec la même orientation spatiale.

La figure 3 est un détail des figures 1 et 2 montrant la tige télescopique articulée.

La figure 4 est un organigramme de la chaîne de commande du robot.

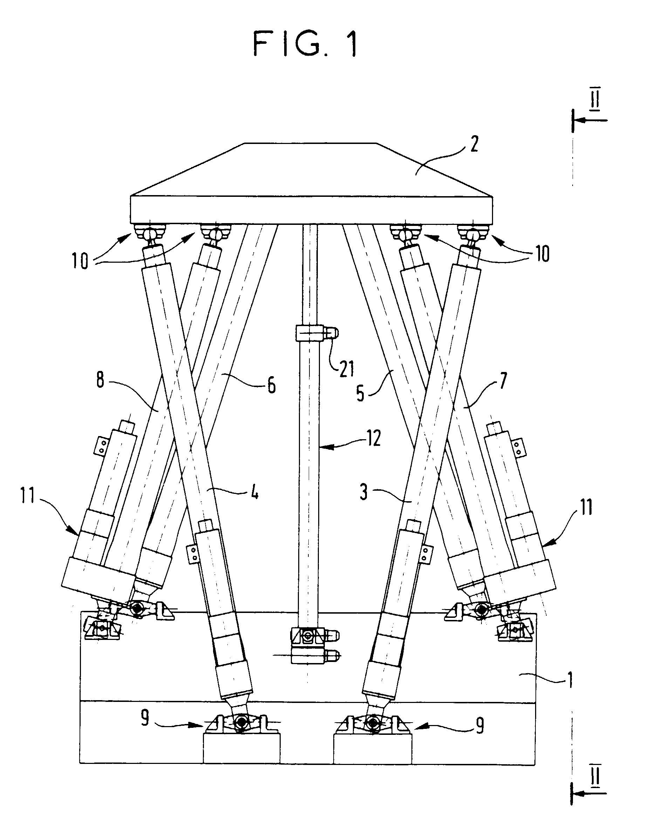

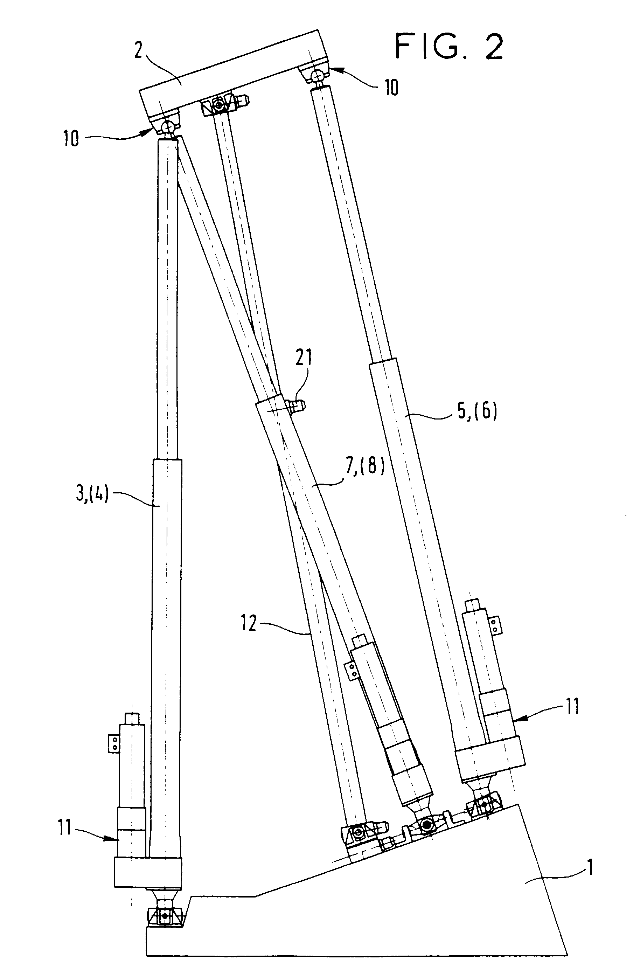

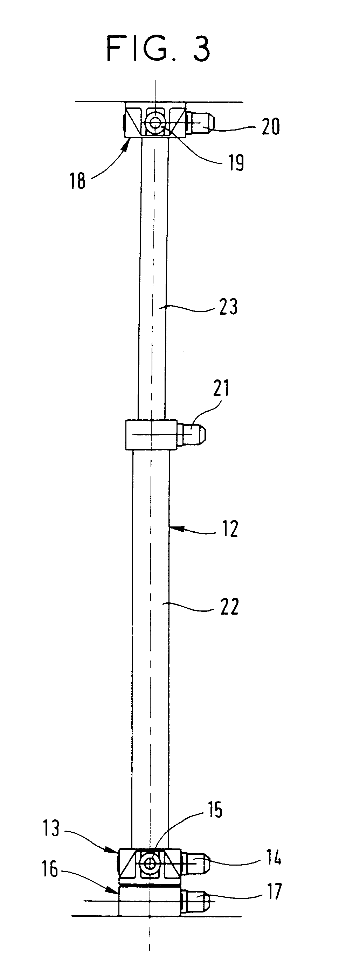

En se reportant aux figures 1 à 3, on voit un robot à structure parallèle selon l'invention. Il comprend une table inférieure 1 constituant le socle ou organe fixe, une table supérieure 2 mobile et constituant l'organe terminal ou lié à un organe terminal effecteur quelconque. Ces deux tables supérieure 1 et inférieure 2 sont reliées par six vérins motorisés référencés 3 à 8. Ces six vérins sont positionnés de façon à réaliser un système triangulé afin d'obtenir un ensemble rigide stable.

Chaque vérin est articulé à la table inférieure 1 au moyen d'un dispositif à cardan 9, donc à deux axes d'articulation et à la table supérieure 2 par un dispositif à rotule 10, donc à trois axes d'articulation.

Chaque vérin 3 à 8 est motorisé et est donc équipé d'un moto-réducteur 11. Chaque vérin est également équipé d'un codeur pour la mesure de son élongation. Ce codeur est situé dans l'ensemble moto-réduction de chaque vérin et n'est pas visible sur les figures.

Conformément à l'invention, la table inférieure 1 et la table supérieure 2 sont en outre reliées au voisinage de leur centre de gravité, par une tige télescopique 12 articulée à son extrémité inférieure à la table 1 par une articulation du type rotule, donc à trois axes d'articulation, et comprenant un cardan 13 équipé de deux codeurs 14 et 15 et un palier 16 équipé d'un codeur 17. La tige est en outre articulée à son extrémité supérieure à la table 2 par une articulation à deux axes comprenant un cardan 18 équipé de deux codeurs 19 et 20. Un codeur 21 permet en outre de mesurer l'élongation de la tige télescopique. Cette tige télescopique 12 est passive, non motorisée, et n'est utilisée que pour connaître la position réelle et exacte de l'effecteur lié à la table supérieure 2, à partir des données des six codeurs liés à la tige télescopique 12, donc des codeurs angulaires 14, 15, 17, 19, 20 et du codeur de mesure d'élongation 21 en utilisant le modèle mathématique direct de la tige jouant le rôle de robot de structure série passif (non motorisé).

Bien entendu, les deux parties 22 et 23 de la tige télescopique 12 sont immobilisées en rotation l'une par rapport à l'autre.

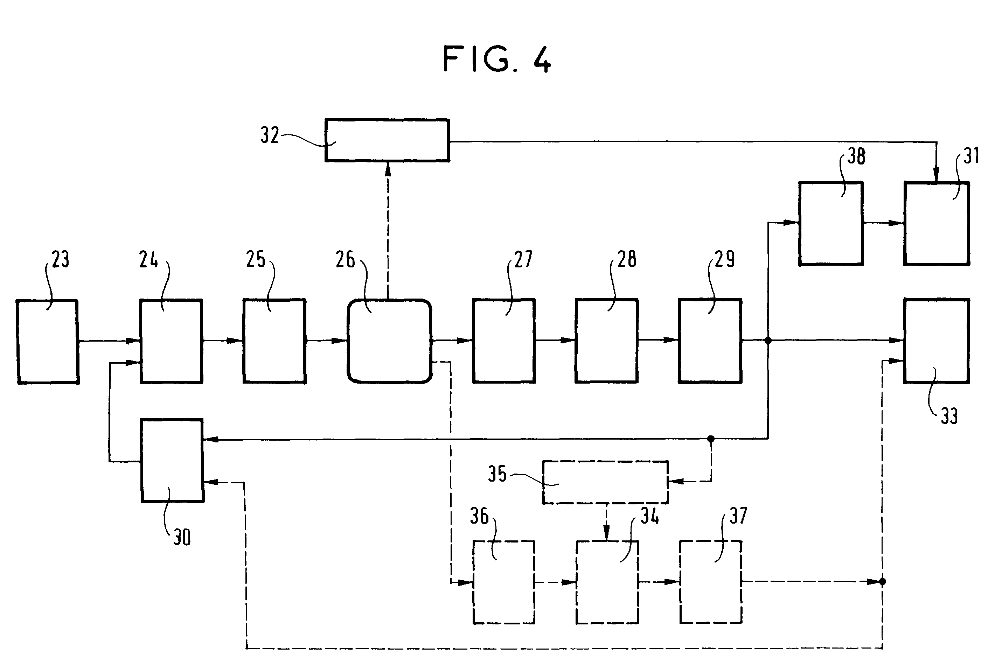

La figure 4 représente un organigramme de la chaîne de commande du robot.

La référence 23 représente la consigne de position de l'organe effecteur lié à la table supérieure 2. Elle comprend six paramètres envoyés à un calculateur 24 qui effectue le modèle mathématique inverse du robot à structure parallèle. A partir de ce modèle, on élabore en 25 la consigne de longueur des six vérins 3 à 8, consigne envoyée à la motorisation des vérins du robot figuré en 26. La référence 27 figure la mesure de position des six axes passifs de la tige télescopique 12 obtenue par les six codeurs 14, 15, 17, 19, 20 et 21, mesures permettant d'élaborer en 28 le modèle mathématique direct permettant d'obtenir la position effective de l'organe effecteur figurée en 29, et à partir de cette position on effectue en 30 le calcul de correction de position à effectuer envoyé en 24.

Grâce à cette correction de position effectuée à partir de la mesure de position des axes passifs (la tige télescopique 12), on n'a ni effet de température par échauffement interne sur cette mesure de position des axes puisque ceux-ci sont passifs, non motorisés, ni effet mécanique tel que la flexion sous la charge portée par le robot.

L'organigramme comprend également en 38 une comparaison de la position de l'organe effecteur avec les limites du domaine des positions autorisées pour éventuellement commander un arrêt d'urgence, figuré en 31.

Le robot comprend également des fins de courses 32 commandant l'arrêt du mouvement. La position effective de l'organe effecteur est envoyée vers un organe d'information 33 de l'opérateur. Enfin, la commande peut également, si désiré, comporter une redondance du calcul de la position de l'effecteur en utilisant le modèle mathématique direct 34 du robot parallèle en prenant comme point de départ de l'itération, la sortie de 29 figurée en 35 et en utilisant la mesure 36 de position des six vérins du robot. On aboutit à la position de l'organe effecteur en 37 envoyée à l'organe d'information 33.

## Revendications

1. Robot à structure parallèle comportant une table inférieure (1) et une table supérieure (2) solidaire d'un organe effecteur, reliées par six vérins motorisés (3 à 8), les vérins étant positionnés de façon à réaliser une triangulation et chacun d'eux étant articulés d'une part à la table inférieure et d'autre part à la table supérieure selon au moins cinq axes d'articulation : trois à une extrémité (10) et au moins deux à l'autre extrémité (9), chaque vérin étant équipé d'un codeur mesurant son élongation, caractérisé en ce que la table inférieure (1) est en outre reliée à la table supérieure (2), au voisinage de leur centre de gravité respectif, par une tige télescopique (12) articulée à ses extrémités à la table inférieure et à la table supérieure selon cinq axes d'articulation : deux à l'une de ses extrémités (18) et trois à l'autre extrémité (13, 16) cette tige télescopique étant équipée de six codeurs : un (21) pour l'élongation de la tige, deux (19, 20) pour l'articulation à deux axes de type cardan et trois (14, 15, 17) pour l'articulation à trois axes de type rotule, ledit robot ayant une chaîne de commande utilisant le modèle mathématique inverse (24) du robot pour déterminer les consignes (25) d'élongation des vérins à partir d'une consigne de position (23) du plateau supérieur et utilisant le modèle mathématique direct (28) de ladite tige télescopique articulée (12), jouant le rôle de robot passif non motorisé, pour calculer la position effective (29) du plateau supérieur à partir des données (27) des six codeurs équipant ladite tige, et effectuer à partir de cette position effective, la correction (30) de position nécessaire.

2. Robot selon la revendication 1, caractérisé en ce que ladite chaîne de commande comprend en outre des moyens de comparaison (38) de la position de l'organe effecteur avec les limites du domaine des positions autorisées de cet organe, dont la sortie est reliée à des moyens de commande d'arrêt d'urgence (31).
